# EUROPÄISCHE PATENTSCHRIFT

(11) **EP 2 695 792 B1**
(45) Veröffentlichungstag und Bekanntmachung des Hinweises auf die Patenterteilung: **09.03.2016**
(21) Anmeldenummer: 13179444.8
(22) Anmeldetag: 06.08.2013
(51) Int. Cl.: B62D 1/04, B60R 16/00, B60K 37/06, G06F 3/0354, G06F 3/042

(54) **Vorrichtung mit einer Lenkhandhabe und einem Bedienfeld und Kraftfahrzeug**
Device with a steering handle and a control panel and motor vehicle
Dispositif doté d'un volant de direction, d'un champ de commande et véhicule automobile

(30) Priorität: 09.08.2012 DE 102012015763
(43) Veröffentlichungstag der Anmeldung: 12.02.2014
(73) Patentinhaber: Valeo Schalter und Sensoren GmbH, 74321 Bietigheim-Bissingen (DE)
(72) Erfinder: Reilhac, Patrice, 73732 Esslingen (DE)

(56) Entgegenhaltungen:
- DE-A1-102005 059 449
- DE-A1-102006 024 252
- DE-A1-102009 038 333
- DE-A1-102009 046 376
- DE-B3-102004 007 253
- DE-U1- 20 105 002
- JP-A- 2005 321 948
- US-A1- 2008 061 954
- US-A1- 2008 143 686
- US-A1- 2011 160 933

## Beschreibung

Die Erfindung betrifft eine Vorrichtung zum Bedienen eines Fahrerassistenzsystems und/oder eines Infotainmentsystems eines Kraftfahrzeugs, mit einer Lenkhandhabe (etwa einem Lenkrad) zum Lenken des Kraftfahrzeugs, wie auch mit einem Bedienfeld, welches zumindest durch einen Oberflächenbereich der Lenkhandhabe gebildet ist, wobei durch Berühren des Bedienfelds mit zumindest einem Finger Bedienvorgänge zum Bedienen des Fahrerassistenzsystems und/oder des Infotainmentsystems durchführbar sind. Die Erfindung betrifft außerdem ein Kraftfahrzeug mit einer solchen Vorrichtung.

Es ist bereits Stand der Technik, das Lenkrad eines Kraftfahrzeugs mit einer Vielzahl von Bedienelementen auszustatten, welche zum Bedienen von unterschiedlichen Systemen des Fahrzeugs dienen. Mit Hilfe von solchen Bedienelementen kann beispielsweise ein Radio oder aber ein Telefon bedient werden, und es ist auch möglich, beispielsweise die Darstellung im Kombiinstrument mittels eines am Lenkrad angebrachten Bedienelements zu steuern.

Zum Stand der Technik gehören auch solche Lenkräder, welche über berührungsempfindliche Tastflächen bzw. Bedienfelder verfügen, wie es beispielsweise in dem Dokument DE 10 2009 038 333 A1 vorgeschlagen wird. Mit Hilfe eines solchen Touchpads können Eingaben empfangen werden, über welche beispielsweise ein Menüeintrag in einem auf einem Display dargestellten Menü aus einer Vielzahl von solchen Menüeinträgen ausgewählt wird.

Es sind außerdem Vorrichtungen bekannt, bei denen das berührungsempfindliche Bedienfeld mittig bzw. in einem Zentrum des Lenkrades angeordnet ist. Bei solchen Vorrichtungen ist das Bedienfeld in eine Abdeckung für den Airbag integriert. Eine solche Integration des Bedienfelds in die zentrale Abdeckung des Lenkrades und somit in den Nabenbereich hat insbesondere den Vorteil, dass das Bedienfeld entsprechend groß ausgeführt werden kann, weil gerade an dieser zentralen Stelle des Lenkrades im Vergleich zu den Lenkradspeichen etwas mehr Platz zur Verfügung steht. Eine solche Anordnung eines berührungsempfindlichen Displays im Zentrum des Lenkrades ist beispielsweise aus der Druckschrift DE 201 05 002 U1 bekannt.

Die Anordnung des berührungsempfindlichen Bedienfeldes im Zentrum des Lenkrades ist zwar wegen der möglichen Größe des Bedienfeldes vorteilhaft, jedoch ist die Anordnung des Bedienfeldes an der Airbag-Abdeckung auch mit gewissen Nachteilen verbunden: Zum einen ist dann die Anbringung eines Logos des Fahrzeugherstellers im Zentrum des Lenkrades nicht möglich. Zum anderen - was überwiegt - ist die Integration eines berührungsempfindlichen Bedienfelds in die Abdeckung des Airbags relativ aufwändig, und es steht dort im Vergleich zu anderen Positionen im Fahrzeug - etwa im Vergleich zu einer Mittelkonsole - relativ wenig Bauraum zur Verfügung. Somit ist die Größe des Bedienfeldes weiterhin beschränkt. Dies wird ferner dadurch bekräftigt, dass die Abdeckung des Airbags üblicherweise keine rechteckige Form aufweist und für das rechteckige Bedienfeld noch weniger Bauraum zur Verfügung steht. Die Herstellung eines an die Konturen der Abdeckung angepassten berührungssensitiven Bedienfeldes ist wiederum relativ aufwändig.

Aus der JP 2005 321948 ist eine Vorrichtung nach dem Oberbegriff des unabhängigen Anspruchs 1 bekannt.

Es ist Aufgabe der Erfindung, eine Lösung aufzuzeigen, wie eine Vorrichtung der eingangs genannten Gattung im Vergleich zum Stand der Technik weniger aufwändig aufgebaut werden kann, so dass bei gleichzeitiger Reduktion des benötigten Bauraums die Größe des Bedienfeldes erhöht werden kann.

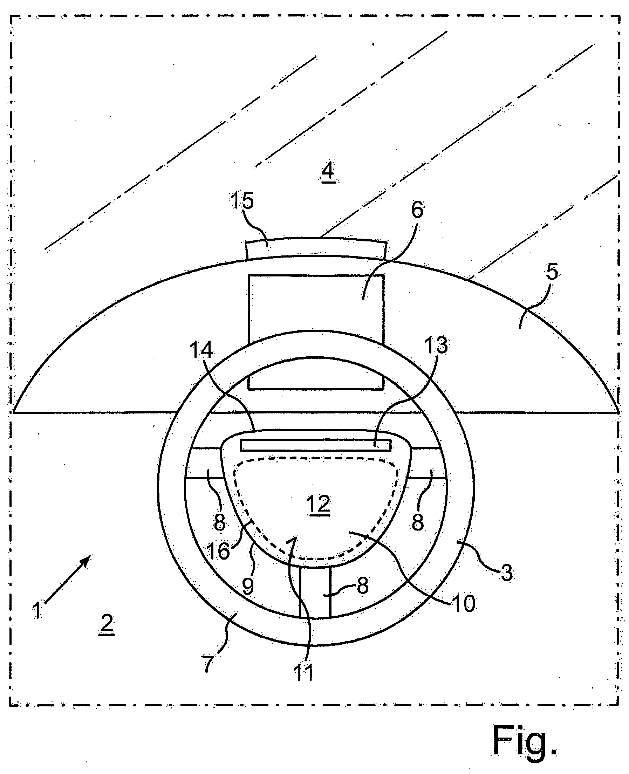

Diese Aufgabe wird erfindungsgemäß durch eine Vorrichtung sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figur.

Eine erfindungsgemäße Vorrichtung ist zum Bedienen eines Fahrerassistenzsystems und/oder eines Infotainmentsystems eines Kraftfahrzeugs ausgebildet. Sie umfasst eine Lenkhandhabe zum Lenken des Kraftfahrzeugs. Die Lenkhandhabe ist beispielsweise ein Lenkrad, wie es in vielfältiger Ausgestaltung aus dem Stand der Technik bekannt ist. Die Vorrichtung umfasst außerdem ein Bedienfeld, welches zumindest durch einen Oberflächenbereich der Lenkhandhabe gebildet ist. Durch Berühren des Bedienfelds mit zumindest einem Finger werden Bedienvorgänge zum Bedienen des Fahrerassistenzsystems und/oder des Infotainmentsystems durchgeführt. Beim Berühren des Bedienfeldes können also verschiedenste Funktionen des Fahrerassistenzsystems und/oder des Infotainmentsystems ausgelöst und/oder verschiedenste Parameter eingestellt werden, insbesondere auch in einer Interaktion mit einem Display. Erfindungsgemäß ist vorgesehen, dass außerhalb des Bedienfeldes eine optische Detektionseinrichtung angeordnet ist, welche eine Position des zumindest einen Fingers beim Berühren des Bedienfeldes erfasst und die erfasste Position einem Bedienvorgang zuordnet.

Es wird also ein virtuelles Tastfeld bereitgestellt, welches vollständig sensorlos und somit frei von Sensoren ausgeführt werden kann, und die Berührung dieses Tastfelds bzw. Bedienfelds kann mittels der optischen Detektionseinrichtung detektiert werden, welche außerhalb des Bedienfeldes und vorzugsweise an der Handhabe angeordnet ist. Somit kann beispielsweise das Bedienfeld völlig frei von Sensoren oder sogar völlig frei von elektronischen Elementen sein, so dass in diesem Bedienfeld auch gegebenenfalls ein Logo des Fahrzeugherstellers angebracht werden kann. Ein entscheidender Vorteil der Vorrichtung besteht jedoch darin, dass der benötigte Bauraum für die Unerbringung der Detektionseinrichtung relativ gering ist, während gleichzeitig die Größe des Bedienfelds alleine im Vergleich zum Stand der Technik wesentlich erhöht werden kann. So kann das Bedienfeld beispielsweise durch die vollständige Oberfläche einer Abdeckung des Airbags gebildet sein, während die optische Detektionseinrichtung z.B. im Randbereich des Bedienfelds bzw. der Abdeckung angeordnet werden kann.

In einer Ausführungsform ist vorgesehen, dass die Detektionseinrichtung als Infrarot-Detektionseinrichtung mit zumindest einer IR-Quelle und zumindest einem IR-Empfänger ausgebildet ist. Solche Infrarot-Detektionseinrichtungen haben sich bereits beispielsweise bei der Erfassung von Gesten und dergleichen insgesamt bewährt. Sie ermöglichen im Allgemeinen eine präzise Erfassung der Position des Fingers in dem Bedienfeld und beanspruchen außerdem relativ wenig Bauraum, was sich insbesondere beim Einsatz bei einer Lenkhandhabe als besonders vorteilhaft erweist.

Ist die Infrarot-Detektionseinrichtung in Form eines länglichen Streifens ausgeführt und weist sie eine Vielzahl von IR-Empfängern auf, welche entlang des Streifens verteilt angeordnet sind, so kann eine besonders gut aufgelöste Erfassung der Position des Fingers des Benutzers erreicht werden. Ein solcher Streifen kann außerdem ohne viel Aufwand an der Lenkhandhabe positioniert werden, nämlich beispielsweise entlang einer Kontur einer Abdeckung des Airbags.

Der genannte Streifen kann beispielsweise eine Länge in einem Wertebereich von 18 cm bis 22 cm aufweisen. Die Breite des Streifens kann z. B. in einem Wertebereich von 1 cm bis 3 cm liegen. Seine Tiefe wiederum kann in einem Wertebereich von 0,5 cm bis 1 cm liegen. Die Länge kann z.B. 20 cm betragen, die Breite kann beispielsweise 2 cm betragen, und die Tiefe kann beispielsweise 0,8 cm betragen.

Wie bereits ausgeführt, kann in einer Ausführungsform das Bedienfeld vollständig sensorfrei bzw. sensorlos ausgeführt werden. Dies bedeutet, dass das Bedienfeld frei von Sensoren ist, welche zur Erfassung der Position der Berührung dienen könnten. Es handelt sich dabei beispielsweise um kapazitive Sensoren oder aber um resistive Sensoren, wie sie im Stand der Technik zur Erfassung der Berührung von bekannten Touchpads oder Touchdisplays eingesetzt werden. Ist das Bedienfeld frei von solchen Sensoren, so steht mehr Bauraum für andere Komponenten oder aber beispielsweise für ein Logo des Fahrzeugherstellers zur Verfügung.

Also kann das Bedienfeld durch einen dem Fahrer zugewandten Oberflächenbereich - insbesondere durch den überwiegenden Oberflächenbereich - einer zentralen Abdeckung für einen Airbag gebildet sein. Somit ist das Bedienfeld quasi zentral am Lenkrad angeordnet, und die Größe des Bedienfelds ist maximal. Somit wird es möglich, eine Vielzahl von Funktionen des Fahrerassistenzsystems und/oder des Infotainmentsystems zu bedienen, so dass die Aufmerksamkeit des Fahrers nicht auf andere Bereiche des Fahrzeugs bzw. auf andere Bedieneinrichtungen - etwa im Bereich der Mittelkonsole - abgelenkt wird. Der Fahrer kann sich ausschließlich auf die Lenkhandhabe sowie das Umfeld vor dem Kraftfahrzeug konzentrieren. Diese Ausführungsform erweist sich also insbesondere im Vergleich zu Systemen als besonders vorteilhaft, welche mit Hilfe eines Steuerknüppels bedient werden, der sich zwischen dem Fahrersitz und dem Beifahrersitz an einer Mittelkonsole befindet. Es können sogar alle Funktionen einer Mensch-Maschine-Schnittstelle des Kraftfahrzeugs mit Hilfe des Bedienfelds bedient werden, das durch den Oberflächenbereich der zentralen Abdeckung des Airbags gebildet ist

Bei der optischen Detektionseinrichtung kann auch die sogenannte Multitouch-Funktion realisiert werden. Und zwar kann die Detektionseinrichtung dazu ausgelegt sein, die jeweilige Position von zumindest zwei Fingern des Benutzers in dem Bedienfeld zu erfassen und einen gemeinsamen Bedienvorgang zum Bedienen des Fahrerassistenzsystems zuzuordnen. Somit kann die Anzahl der Funktionen weiterhin erhöht werden, welche mittels des Bedienfelds ausgelöst werden können.

Die Anzahl der Funktionen kann weiterhin erhöht werden, wenn eine Bewegung des zumindest einen Fingers an dem Bedienfeld durch die Detektionseinrichtung erfasst und einem bestimmten Bedienvorgang zugeordnet wird.

Als besonders vorteilhaft erweist sich die erfindungsgemäße Vorrichtung insbesondere in Kombination mit einem Fahrerassistenzsystem, welches zum automatischen und/oder semi-automatischen Rangieren des Kraftfahrzeugs, insbesondere zum automatischen und/oder semi-automatischen Einparken, ausgebildet ist. Während beim vollständig automatischen Rangieren sowohl die Längsführung als auch die Querführung des Kraftfahrzeugs durch das Fahrerassistenzsystem übernommen wird, ist beim semi-automatischen Rangieren bzw. semi-autonomen Rangieren vorgesehen, dass das Fahrerassistenzsystem die Querführung übernimmt, während der Fahrer lediglich Gas geben und abbremsen muss. Bei solchen automatischen und/oder semi-automatischen Rangiervorgängen wird es dem Fahrer ermöglicht, mittels des Bedienfelds nicht nur auf die Führung des Kraftfahrzeugs bezogene Eingaben vorzunehmen, sondern auch andere, nicht auf die Führung des Fahrzeugs bezogene Funktionen zu bedienen, nämlich beispielsweise die Infotainment-Funktionen oder dergleichen.

Neben automatischen und/oder semi-automatischen Rangieren des Kraftfahrzeugs ist die erfindungsgemäße Vorrichtung auch besonders von Vorteil, wenn sie beim automatischen oder halbautomatischen Fahren verwendet wird. Dabei wird bei bestimmten Verkehrssituationen wie Verkehrsstau oder Autobahnfahrt die Möglichkeit angeboten, die Kontrolle des Autos eines Fahrerassistenzsystems zu überlassen, das sowohl die Lenkung als auch das Bremsen und/oder Beschleunigen kontrolliert vorausgesetzt unterschiedlichen Sensoren wie Radar-, Laser-, Kamera- und/oder Ultraschallsensoren einen Überblick der Verkehrslage um das Fahrzeug ermöglichen. Mit der erfindungsgemäßen Vorrichtung ist eine Wiederaufnahme der Kontrolle des Fahrzeugs seitens des Fahrers über das Fahrerassistenzsystem z.B. nach einer Anforderung vom Fahrerassistenzsystem besonders schnell und zuverlässig gewährleistet, da der Fahrer sowieso die Hände am Lenkrad hat, und sein Blick in Fahrtrichtung gerichtet ist.

Erfindungsgemäß ist vorgesehen, dass die Vorrichtung eine Entkopplungseinrichtung aufweist, mittels welcher die Handhabe von den Rädern des Kraftfahrzeugs entkoppelt werden kann, und zwar insbesondere beim automatischen und/oder semi-automatischen Rangiervorgang. Somit verbleibt auch beim automatischen Rangieren die Handhabe stets in der gleichen Winkelposition, so dass der Fahrer ungestört seine Eingaben an dem Bedienfeld durch Berühren des Bedienfeldes vornehmen kann. Dem Fahrer wird jedoch stets die Möglichkeit gegeben, die Kontrolle über sein Kraftfahrzeug wieder zu erlangen, indem beispielsweise die Lenkhandhabe selbst durch den Fahrer in eine andere Lenkwinkelposition gebracht wird.

Insbesondere weist die Vorrichtung zusätzlich auch eine optische Anzeigeeinrichtung auf, welche zum Anzeigen von Benutzerinformationen des Fahrerassistenzsystems und/oder des Infotainmentsystems ausgebildet ist. Die Vorrichtung stellt somit eine Mensch-Maschine-Schnittstelle dar, und es findet bevorzugt eine Interaktion zwischen den Eingaben an dem Bedienfeld einerseits und der Darstellung auf der Anzeigeeinrichtung andererseits statt. Wie dies bei heutigen Kraftfahrzeugen mit einem zentralen Display und einem Steuerknüppel an der Mittelkonsole der Fall ist, kann der Fahrer nun mit Hilfe des Bedienfelds sowie der Anzeigeeinrichtung quasi alle Infotainment-Systeme des Kraftfahrzeugs direkt an dem Lenkrad bedienen.

Vorzugsweise umfasst die Anzeigeeinrichtung ein Head-Up-Display. Mit einem solchen Head-Up-Projektor können Benutzerinformationen auf eine Windschutzscheibe des Kraftfahrzeugs projiziert werden, und die Darstellung der Informationen erfolgt direkt im Sichtfeld des Fahrers. Ein solches Display ist somit besonders benutzerfreundlich.

Ergänzend oder alternativ kann die Anzeigeeinrichtung ein an der Lenkhandhabe selbst angeordnetes Display umfassen, nämlich beispielsweise ein LCD-Display oder aber ein TFT-Display. Bei dieser Ausführungsform kann auch vorgesehen sein, dass das Bedienfeld zumindest durch einen Flächenbereich des Displays gebildet ist. Es wird also ein Display - insbesondere an der Abdeckung für den Airbag - eingesetzt, dessen Anzeigefläche - insbesondere die vollständige Anzeigefläche - das Bedienfeld bildet, welches zum Bedienen des Fahrerassistenzsystems bzw. des Infotainmentsystems berührt werden kann. Von herkömmlichen Touchdisplays unterscheidet sich dieses Display dadurch, dass die Erfassung der Berührung nicht mit Hilfe von kapazitiven oder resistiven Sensoren erfolgt, sondern mittels der außerhalb des Bedienfelds angeordneten optischen Detektionseinrichtung.

Weiterhin ergänzend oder alternativ kann die Anzeigeeinrichtung ein transparentes OLED-Display aufweisen, welches in die Windschutzscheibe integriert sein kann.

Wird ein Display an der Lenkhandhabe angeordnet, dessen Anzeigefläche das Bedienfeld bildet, so kann die Darstellung auf diesem Display auch unter Berücksichtigung der aktuellen Winkelstellung der Lenkhandhabe erzeugt werden. Somit kann erreicht werden, dass die Darstellung auf dem Display selbst dann in ihrer Position unverändert bzw. konstant bleibt, wenn der Fahrer die Lenkhandhabe dreht oder aber selbige Handhabe automatisch durch das Fahrerassistenzsystem bewegt wird. Somit verbleibt die Darstellung auf dem Display unabhängig von dem aktuellen Lenkwinkeleinschlag konstant, wie sie in der Geradeausstellung der Lenkhandhabe gezeigt wird.

Die Erfindung betrifft auch ein Kraftfahrzeug mit einer erfindungsgemäßen Vorrichtung.

Weitere Merkmale der Erfindung ergeben sich aus den Ansprüchen, der Figur und der Figurenbeschreibung. Alle vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels, wie auch unter Bezugnahme auf die beigefügte Zeichnung, näher beschrieben. Dabei veranschaulicht die einzige Figur in schematischer Darstellung eine Vorrichtung gemäß einer Ausführungsform der Erfindung. Es sei betont, dass das nachfolgend beschriebene Ausführungsbeispiel eine bevorzugte Ausführungsform der Erfindung darstellt und die Erfindung somit nicht auf diese beispielhafte Ausführungsform beschränkt ist.

In der Fig. ist in schematischer Darstellung eine Vorrichtung 1 gezeigt, welche in einem Kraftfahrzeug 2, etwa einem Personenkraftwagen, verbaut ist. In an sich bekannter Weise ist ein Lenkrad 3 als eine Lenkhandhabe vor einer Windschutzscheibe 4 angeordnet. Zwischen dem Lenkrad 3 und der Windschutzscheibe 4 befindet sich ein Kombiinstrument 5, welches in bekannter Weise einen Tachometer, einen Kilometerzähler, gegebenenfalls einen Drehzahlmesser und optional ein Display 6 zur Darstellung von Benutzerinformationen aufweist.

Das Lenkrad 3 weist einen Lenkradkranz 7 auf, welcher beispielsweise ringförmig ausgebildet ist. Über Lenkradspeichen 8, an denen gegebenenfalls Bedienelemente angeordnet sein können, ist der Lenkradkranz 7 mit einer Nabe 9 verbunden. Die Nabe 9 trägt eine Abdeckung 10 für einen nicht dargestellten Airbag, welcher in die Nabe 9 integriert ist. Die Abdeckung 10 ist dem Fahrer zugeordnet und von außen sichtbar. Die Abdeckung 10 bzw. die Nabe 9 kann grundsätzlich verschiedenste geometrische Formen aufweisen. Lediglich beispielhaft seien hier die Kreisform, die Rechteckform, eine ovale Form sowie eine in der Fig. dargestellte D-Form genannt.

Die Abdeckung 10 hat eine Oberfläche 11, welche dem Fahrer zugewandt ist. Die überwiegende Oberfläche 11 stellt gleichzeitig ein Bedienfeld 12 dar, welches zum Bedienen eines Fahrerassistenzsystems und/oder eines Infotainmentsystems des Kraftfahrzeugs 2 durch den Fahrer berührt werden kann. Mit anderen Worten ist das Bedienfeld 12 ein virtuelles berührungsempfindliches Tastfeld, wobei zur Erfassung der Berührung keine kapazitiven oder resistiven Sensoren eingesetzt werden. Stattdessen wird im oberen Randbereich der Abdeckung 10 und somit im Randbereich bzw. ein wenig über dem Bedienfeld 12 eine optische Detektionseinrichtung 13 eingesetzt, welche eine Infrarot-Einrichtung ist. Die Detektionseinrichtung 13 hat zumindest eine Infrarot-Quelle sowie vorzugsweise mehrere Infrarot-Empfänger (nicht dargestellt). Die Detektionseinrichtung 13 hat insgesamt eine längliche Form und erstreckt sich in Form eines länglichen Streifens in horizontaler Richtung (bei Geradeausstellung des Lenkrads 3). Die Detektionseinrichtung 13 erstreckt sich also im Wesentlichen parallel zu einem oberen Rand 14 der Abdeckung 10 bzw. der Nabe 9.

Die Infrarot-Empfänger sind entlang des die Detektionseinrichtung 13 bildenden Streifens verteilt angeordnet. Sowohl die Infrarot-Quelle als auch die Infrarot-Empfänger sind in Richtung auf die Oberfläche 11 und somit auf das Bedienfeld 12 ausgerichtet. Somit kann die Position der Berührung des Bedienfelds 12 mittels der Detektionseinrichtung 13 ohne viel Aufwand durch entsprechende Auswertung der Signale der Infrarot-Empfänger erfasst und detektiert werden.

Zur Vorrichtung 1 gehört außerdem eine Anzeigeeinrichtung, welche das oben genannte Display 6 und/oder ein Head-Up-Display 15 und/oder ein mit einer gestrichelten Linie angedeutetes Display 16 umfassen kann, welches in die Abdeckung 10 integriert ist. Ist ein solches Display 16 vorhanden, so bildet seine Oberfläche bzw. Anzeigefläche gleichzeitig auch das Bedienfeld 12, welches durch den Fahrer berührt werden kann, um vorbestimmte Funktionen des Fahrerassistenzsystems bzw. des Infotainmentsystems auszulösen und/oder bestimmte Parameter einzustellen.

Wird das optionale Display 16 eingesetzt, so kann die Darstellung auf diesem Display 16 auch so gestaltet werden, dass sie die jeweils aktuelle Winkelstellung des Lenkrades 3 berücksichtigt und somit unabhängig von dieser aktuellen Winkelstellung konstant bleibt bzw. kontinuierlich in einer aufrechten Position gezeigt wird.

Die Form bzw. die Kontur des Displays 16 kann auch an die äußeren Konturen der Abdeckung 10 angepasst sein. Mit anderen Worten kann das Display 16 eine Form aufweisen, welche der geometrischen Form der Abdeckung 10 entspricht.

Die Vorrichtung 1 kann insgesamt zum Bedienen des gesamten Infotainment-Systems des Kraftfahrzeugs 2 dienen. Sie stellt eine Mensch-Maschine-Schnittstelle dar, über welche der Fahrer durch Eingaben an dem Bedienfeld 12 eine Funktionalität des Kraftfahrzeugs 2 steuern kann sowie über welche auch Benutzerinformationen als interaktive Informationen mittels der Anzeigeeinrichtung 6 und/oder 15 und/oder 16 ausgegeben werden können.

Insbesondere kann mittels der Vorrichtung 1 auch ein automatisches oder semiautomatisches Rangiersystem als Fahrerassistenzsystem bedient bzw. gesteuert werden. Beispielsweise kann an dem Bedienfeld 12 eine Eingabe vorgenommen werden, über welche ein automatischer Rangiervorgang freigegeben oder aber unterbrochen wird. Während eines solchen Rangiervorgangs kann das Lenkrad 3 auch von den Rädern des Kraftfahrzeugs 2 entkoppelt werden, so dass das Lenkrad 3 auch beim automatischen Einschlagen der Räder in seiner Geradeausstellung verbleibt. Durch aktives Drehen des Lenkrades 3 kann der Fahrer jedoch jederzeit die Kontrolle über das Kraftfahrzeug 2 übernehmen.

Während eines automatischen oder semi-automatischen Rangiervorgangs kann dem Fahrer auch die Möglichkeit gegeben werden, über das Bedienfeld 12 das gesamte Infotainment-System des Kraftfahrzeugs 2 zu steuern. So können beispielsweise über das Bedienfeld 12 auf dem Display 16 dargestellte Menüeinträge ausgewählt und z.B. ein bestimmter Radiosender ausgewählt oder aber sogar ein Rechner bedient werden.

## Patentansprüche

1. Vorrichtung (1) zum Bedienen eines Fahrerassistenzsystems und/oder eines Infotainmentsystems eines Kraftfahrzeugs (2), mit einer Lenkhandhabe (3) zum Lenken des Kraftfahrzeugs (2), und mit einem Bedienfeld (12), welches zumindest durch einen Oberflächenbereich (11) der Lenkhandhabe (3) gebildet ist, wobei durch Berühren des Bedienfelds (12) mit zumindest einem Finger Bedienvorgänge zum Bedienen des Fahrerassistenzsystems und/oder Infotainmentsystems durchführbar sind, und
die Vorrichtung (1) eine außerhalb des Bedienfelds (12) angeordnete optische Detektionseinrichtung (13) aufweist, welche dazu ausgelegt ist, eine Position des zumindest einen Fingers in dem Bedienfeld (12) zu erfassen und die erfasste Position einem Bedienvorgang zuzuordnen
**dadurch gekennzeichnet, dass**
die Vorrichtung (1) eine Entkopplungseinrichtung zum Entkoppeln der Handhabe von Rädern des Kraftfahrzeugs (2), insbesondere beim automatischen und/oder semi-automatischen Rangiervorgang, aufweist.

2. Vorrichtung (1) nach Anspruch 1,
**dadurch gekennzeichnet, dass**
die Detektionseinrichtung (13) als Infrarot-Detektionseinrichtung mit zumindest einer IR-Quelle und zumindest einem IR-Empfänger ausgebildet ist.

3. Vorrichtung (1) nach Anspruch 2,
**dadurch gekennzeichnet, dass**
die Infrarot-Detektionseinrichtung (13) in Form eines länglichen Streifens ausgeführt ist und eine Vielzahl von IR-Empfängern aufweist, welche entlang des Streifens verteilt angeordnet sind.

4. Vorrichtung (1) nach einem der vorhergehenden Ansprüche,
**dadurch gekennzeichnet, dass**
die Detektionseinrichtung (13) in einem Randbereich des Bedienfelds (12) angeordnet ist.

5. Vorrichtung (1) nach einem der vorhergehenden Ansprüche,
**dadurch gekennzeichnet, dass**
das Bedienfeld (12) frei von Sensoren ist.

6. Vorrichtung (1) nach einem der vorhergehenden Ansprüche,
**dadurch gekennzeichnet, dass**
das Bedienfeld (12) durch einen Oberflächenbereich (11) einer zentralen Abdeckung (10) für einen Airbag gebildet ist.

7. Vorrichtung (1) nach einem der vorhergehenden Ansprüche,
**dadurch gekennzeichnet, dass**
die Detektionseinrichtung (13) dazu ausgelegt ist, die jeweilige Position von zumindest zwei Fingern in dem Bedienfeld (12) zu erfassen und einem gemeinsamen Bedienvorgang zuzuordnen.

8. Vorrichtung (1) nach einem der vorhergehenden Ansprüche,
**dadurch gekennzeichnet, dass**
die Detektionseinrichtung (13) dazu ausgelegt ist, eine Bewegung des zumindest einen Fingers an dem Bedienfeld (12) zu erfassen und einem Bedienvorgang zuzuordnen.

9. Vorrichtung (1) nach einem der vorhergehenden Ansprüche,
**dadurch gekennzeichnet, dass**
die Vorrichtung (1) zum Bedienen eines Fahrerassistenzsystems ausgebildet ist, welches zum automatischen und/oder semi-automatischen Fahren oder Rangieren des Kraftfahrzeugs (2), insbesondere zum automatischen und/oder semi-automatischen Einparken, ausgebildet ist.

10. Vorrichtung (1) nach einem der vorhergehenden Ansprüche,
**dadurch gekennzeichnet, dass**
die Vorrichtung (1) eine optische Anzeigeeinrichtung (6, 15, 16) zum Anzeigen von Benutzerinformationen des Fahrerassistenzsystems und/oder des Infotainmentsystems aufweist.

11. Vorrichtung (1) nach Anspruch 10,
**dadurch gekennzeichnet, dass**
die Anzeigeeinrichtung (6, 15, 16) ein Head-Up-Display (15) zum Projizieren der Benutzerinformationen auf eine Windschutzscheibe (4) des Kraftfahrzeugs (2) umfasst.

12. Vorrichtung (1) nach Anspruch 10 oder 11,
**dadurch gekennzeichnet, dass**
die Anzeigeeinrichtung (6, 15, 16) ein an der Lenkhandhabe (3) angeordnetes Display (16) umfasst und das Bedienfeld (12) zumindest durch einen Flächenbereich des Displays (16) gebildet ist.

13. Vorrichtung (1) nach Anspruch 12,
**dadurch gekennzeichnet, dass**
eine Darstellung auf dem Display (16) unter Berücksichtigung einer aktuellen Winkelstellung der Lenkhandhabe (3) erzeugbar ist.

14. Kraftfahrzeug (2) mit einer Vorrichtung (1) nach einem der vorhergehenden Ansprüche.

## Claims

1. Device (1) for operating a driver assistance system and/or an Infotainment system of a motor vehicle (2), having a steering handle (3) for steering the motor vehicle (2) and having an operator control panel (12) which is formed at least by a surface region (11) of the steering handle (3), wherein operator control processes for operating the driver assistance system and/or Infotainment system can be carried out by touching the operator control panel (12) with at least one finger, and
the device (1) has an optical detection device (13) which is mounted outside the operator control panel (12) and is configured to detect a position of the at least one finger in the operator control panel (12) and to assign the detected position to an operator control process,
**characterized in that**
the device (1) has a decoupling device for decoupling the handle from wheels of the motor vehicle (2), in particular during the automatic and/or semi-automatic manoeuvring process.

2. Device (1) according to Claim 1,
**characterized in that**
the detection device (13) is embodied as an infrared detection device with at least one infrared source and at least one infrared receiver.

3. Device (1) according to Claim 2,
**characterized in that**
the infrared detection device (13) is embodied in the form of an elongate strip and has a plurality of infrared receivers which are arranged and distributed along the strip.

4. Device (1) according to one of the preceding claims,
**characterized in that**
the detection device (13) is arranged in an edge region of the operator control panel (12).

5. Device (1) according to one of the preceding claims,
**characterized in that**
the operator control panel (12) is free of sensors.

6. Device (1) according to one of the preceding claims,
**characterized in that**
the operator control panel (12) is formed by a surface region (11) of a central cover (10) for an airbag.

7. Device (1) according to one of the preceding claims,
**characterized in that**
the detection device (13) is configured to detect the respective position of at least two fingers in the operator control panel (12) and to assign it to a common operator control process.

8. Device (1) according to one of the preceding claims,
**characterized in that**
the detection device (13) is configured to detect a movement of the at least one finger on the operator control panel (12) and to assign it to an operator control process.

9. Device (1) according to one of the preceding claims,
**characterized in that**
the device (1) is designed to operate a driver assistance system which is designed to perform automatic and/or semi-automatic driving or manoeuvring of the motor vehicle (2), in particular to perform automatic and/or semi-automatic parking.

10. Device (1) according to one of the preceding claims,
**characterized in that**
the device (1) has a visual display unit (6, 15, 16) for displaying user information of the driver assistance system and/or of the Infotainment system.

11. Device (1) according to Claim 10,
**characterized in that**
the display unit (6, 15, 16) comprises a head-up display (15) for projecting the user information onto a windscreen (4) of the motor vehicle (2).

12. Device (1) according to Claim 10 or 11,
**characterized in that**
the display unit (6, 15, 16) comprises a display (16) which is arranged on the steering handle (3), and the operator control panel (12) is formed at least by a surface region of the display (16).

13. Device (1) according to Claim 12,
**characterized in that**
a representation can be generated on the display (16) by taking into account a current angular position of the steering handle (3).

14. Motor vehicle (2) having a device (1) according to one of the preceding claims.

## Revendications

1. Dispositif (1) pour la commande d'un système d'assistance au conducteur et/ou d'un système d'info-divertissement d'un véhicule automobile (2), comprenant un volant de direction (3) pour diriger le véhicule automobile (2) et un panneau de commande (12) qui est formé au moins par une région de surface (11) du volant de direction (3), des opérations de commande pouvant être effectuées par contact du panneau de commande (12) avec au moins un doigt afin de commander le système d'assistance au conducteur et/ou le système d'info-divertissement, et
le dispositif (1) présentant un dispositif de détection optique (13) disposé à l'extérieur du panneau de commande (12), lequel est conçu pour détecter une position de l'au moins un doigt dans le panneau de commande (12) et pour associer la position détectée à une opération de commande, **caractérisé en ce que**
le dispositif (1) présente un dispositif de désaccouplement pour désaccoupler le volant des roues du véhicule automobile (2), en particulier dans le cas d'une opération de manoeuvre automatique et/ou semi-automatique.

2. Dispositif (1) selon la revendication 1,
**caractérisé en ce que**
le dispositif de détection (13) est réalisé sous forme de dispositif de détection infrarouge avec au moins une source de rayons infrarouges et au moins un récepteur infrarouge.

3. Dispositif (1) selon la revendication 2,
**caractérisé en ce que**
le dispositif de détection infrarouge (13) est réalisé sous la forme d'un ruban allongé et présente une pluralité de récepteurs infrarouges qui sont disposés de manière répartie le long du ruban.

4. Dispositif (1) selon l'une quelconque des revendications précédentes,
**caractérisé en ce que**
le dispositif de détection (13) est disposé dans une région de bord du panneau de commande (12).

5. Dispositif (1) selon l'une quelconque des revendications précédentes,
**caractérisé en ce que**
le panneau de commande (12) est dépourvu de capteurs.

6. Dispositif (1) selon l'une quelconque des revendications précédentes,
**caractérisé en ce que**
le panneau de commande (12) est formé par une région de surface (11) d'un recouvrement central (10) pour un airbag.

7. Dispositif (1) selon l'une quelconque des revendications précédentes,
**caractérisé en ce que**
le dispositif de détection (13) est conçu pour détecter la position respective d'au moins deux doigts dans le panneau de commande (12) et pour l'associer à une opération de commande commune.

8. Dispositif (1) selon l'une quelconque des revendications précédentes,
**caractérisé en ce que**
le dispositif de détection (13) est conçu pour détecter un mouvement de l'au moins un doigt sur le panneau de commande (12) et pour l'associer à une opération de commande.

9. Dispositif (1) selon l'une quelconque des revendications précédentes,
**caractérisé en ce que**
le dispositif (1) est conçu pour commander un système d'assistance au conducteur, lequel est réalisé pour conduire ou manoeuvrer automatiquement et/ou semi-automatiquement le véhicule automobile (2), en particulier pour garer automatiquement et/ou semi-automatiquement le véhicule.

10. Dispositif (1) selon l'une quelconque des revendications précédentes,
**caractérisé en ce que**
le dispositif (1) présente un dispositif d'affichage optique (6, 15, 16) pour afficher des informations d'utilisateur du système d'assistance au conducteur et/ou du système d'info-divertissement.

11. Dispositif (1) selon la revendication 10,
**caractérisé en ce que**
le dispositif d'affichage (6, 15, 16) comprend un affichage tête-haute (15) destiné à projeter les informations d'utilisateur sur un pare-brise (4) du véhicule automobile (2).

12. Dispositif (1) selon la revendication 10 ou 11,
**caractérisé en ce que**
le dispositif d'affichage (6, 15, 16) comprend un affichage (16) disposé sur le volant de direction (3) et le panneau de commande (12) est formé au moins par une région de surface de l'affichage (16).

13. Dispositif (1) selon la revendication 12,
**caractérisé en ce qu'**
une représentation sur l'affichage (16) peut être générée en tenant compte d'une position angulaire actuelle du volant de direction (3).

14. Véhicule automobile (2) comprenant un dispositif (1) selon l'une quelconque des revendications précédentes.
